Europäisches Patentamt

(19) European Patent Office

Office européen des brevets

(11) Veröffentlichungsnummer : **0 301 387 B1**

(12) **EUROPÄISCHE PATENTSCHRIFT**

(45) Veröffentlichungstag der Patentschrift :
02.05.91 Patentblatt 91/18

(21) Anmeldenummer : 88111624.8

(22) Anmeldetag : 19.07.88

(51) Int. Cl.⁵ : **B65G 47/49, B23Q 15/22,**
**G06K 7/08**

(54) **Einrichtung zum Steuern von Werkstückträgern.**

(30) Priorität : 30.07.87 DE 8710480 U

(43) Veröffentlichungstag der Anmeldung :
01.02.89 Patentblatt 89/05

(45) Bekanntmachung des Hinweises auf die
Patenterteilung :
02.05.91 Patentblatt 91/18

(84) Benannte Vertragsstaaten :
AT BE CH DE FR GB IT LI NL

(56) Entgegenhaltungen :
DE-A- 2 508 201

(56) Entgegenhaltungen :
DE-A- 3 203 720
DE-A- 3 225 607
DE-A- 3 422 181
DE-A- 3 440 052
**SOVIET INVENTIONS ILLUSTRATED, Sektionen P,Q, Woche 8704, 11. März 1987. Derwent Publications Ltd. London, P56**

(73) Patentinhaber : **Siemens Aktiengesellschaft**
**Wittelsbacherplatz 2**
**W-8000 München 2 (DE)**

(72) Erfinder : **Fries, Hans, Dipl.-Ing. (FH)**
**Muesmannstrasse 10**
**W-8900 Augsburg (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Während der Fertigung von Werkstücken in voll- oder teilautomatischen Fertigungsstraßen werden die Werkstücke in der Regel Arbeitsgängen verschiedener Art unterzogen. Jeder Arbeitsgang findet dabei meist an einem separaten Arbeitsplatz statt. In Fertigungsstraßen dieser Art werden die Werkstücke mit Hilfe von Werkstückträgern über Fördermittel zu den einzelnen Bearbeitungsstationen transportiert. Um die Steuerung des Transportes der Werkzeugträger bzw. die Steuerung der Bearbeitung der Werkstücke selbst voll- oder teilautomatisch durchführen zu können, ist jedem Arbeitsplatz bzw. jeder Verzweigung des Transportweges ein bestimmter Code zugeordnet und jedes Werkstück bzw. jeder Werkstückträger ist mit dem Code des Arbeitsplatzes bzw. der Verzweigung des Transportweges versehen.

Das Codieren eines Werkstückträgers mit dem Code eines bestimmten Arbeitsplatzes wird häufig mechanisch vorgenommen, indem z.B. mit Hilfe pneumatischer Einrichtungen in sogenannten Codierleisten verstellbare Stifte hinsichtlich ihrer Lage beeinflußt werden, so daß einige der Stifte aus einer Halterung hervorragen, andere dagegen nicht. Bekannt geworden sind auch Magnetcodiereinrichtungen, die in einem Halter gelagerte Magnete besitzen, die, abhängig von dem gewählten Code, entweder in zwei verschiedenen Polarisationsrichtungen magnetisiert werden oder bei denen stattdessen Hartmagnete verwendet werden, die so gelagert sind, daß sie zwei verschiedene, den beiden logischen Wert "0" und "1" zugeordnete Endlagen einnehmen können.

Magnetcodierleisten dieser Art finden zwar in der Praxis häufig Anwendung, haben aber eine Reihe von Nachteilen. Wegen der Beeinflussung der Magnete beim Lesen und Schreiben der in den Codierleisten enthaltenen Informationen müssen die Entfernungen zwischen Sender und Empfänger sehr genau eingehalten werden. Da z.B. bei der aus der europäischen Patentanmeldung 100 689 beschriebenen Magnetcodierleiste scheibenförmige Magneten in Bohrungen gelagert sind und durch Einwirkung des Magnetfeldes eines Senders in den Bohrungen frei umklappen können müssen, sind die Magnete selbst und ihre Lagerung beim Beschreiben erheblichem mechanischem Verschleiß unterworfen. Ferner kann trotz der Tatsache, daß die Magnete durch einen Weichmagnetschluß in ihrer Endlage gehalten werden, die in ihnen gespeicherte Information verlorengehen, wenn die Magnetleisten erschüttert werden, was trotz aller Vorsicht unter den Fertigungsbedingungen einer Fabrik durchaus passieren kann.

Der vorliegenden Erfindung lag daher die Aufgabe zugrunde, eine Einrichtung der eingangs genannten Art zu schaffen, die keinem Verschleiß unterworfen ist, bei der die Entfernung zwischen Schreib- und Lesestation einerseits und Codierleiste andererseits in weitem Rahmen beliebig wählbar ist, bei der durch Erschütterung kein Informationsverlust eintritt, die eine hohe Lese-/Schreibfrequenz ermöglicht und die somit eine hohe Lese-und Schreibsicherheit liefert.

Erfindungsgemäß wird dies erreicht durch einen quaderförmigen Körper (Codierleiste), an dessen einer Längsseite eine Reihe von Lichtempfängern zum Aufnehmen und eine Reihe von Lichtsendern zum Abgeben von den jeweils nächsten Transportweg bzw. die jeweils nächste Bearbeitungsstation des Werkstückes kennzeichnenden codierten Informationen vorgesehen sind, und durch einen im Inneren der Codierleiste angeordneten Speicher zum Zwischenspeichern der Informationen der Transportwege bzw. Bearbeitungs stationen, sowie durch an jeder Transportwegverzweigung bzw. Bearbeitungsstation angeordnete entsprechende Lichtempfänger und/oder Lichtsender zum Lesen der von den Lichtsendern der Codierleiste abgegebenen Informationen bzw. zum Eingeben von neuen Zielinformationen in den Speicher der Codierleiste.

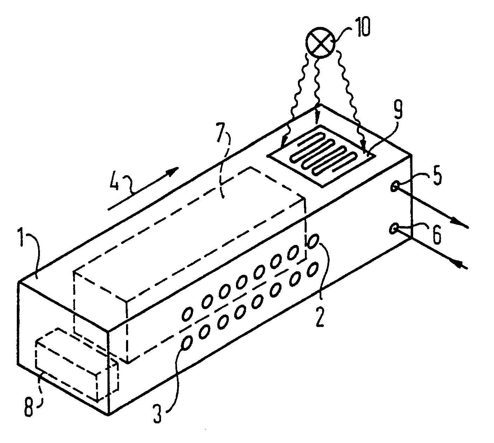

Weitere Ausgestaltungen der erfindungsgemäßen Einrichtung ergeben sich aus der Beschreibung eines vorteilhaften Ausführungsbeispiels der erfindungsgemäßen Einrichtung anhand der Zeichnung.

Die Figur zeigt einen quaderförmigen Körper 1, im folgenden Codierleiste genannt, an dessen einer Längsseite eine Reihe von Lichtempfängern 3 zum Aufnehmen und eine Reihe von Lichtsendern 2 zum Abgeben von den jeweils nächsten Transportweg bzw. die jeweils nächste Bearbeitungsstation des Werkstückes kennzeichnenden codierten Informationen vorgesehen sind. Vorteilhafter Weise sind als Lichtsender Leuchtdioden und als Lichtempfänger Fototransistoren vorgesehen. Um ein Gestörtwerden von Sender und Empfänger durch das Licht in der Umgebung zu vermeiden, können die Leuchtdioden im Infrarotbereich betrieben werden und das von den Leuchtdioden ausgesandte Licht kann zusätzlich moduliert werden. Eine besonders vorteilhafte Ausführung form ergibt sich, wenn die Lichtsender 2 und die Lichtempfänger 3 an der Längsseite der Codierleiste jeweils in einer in Transportrichtung 4 liegenden Reihe angeordnet sind und wenn sich vor jeder Reihe ein zusätzlicher Sender 5 bzw. Empfänger 6 befindet, der beim Passieren einer Erkennungsstation das Einschalten der Sender 2 bzw. Empfänger 3 der Codierleiste bewirkt.

Im Inneren der Codierleiste befindet sich ein Speicher 7 zum Zwischenspeichern der Informationen der Transportwege des Werkstückträgers bzw. der Bearbeitungsstationen für das Werkstück selbst. An jeder Transportverzweigung bzw. an jeder Bearbeitungsstation sind – hier in der Zeichnung nicht dargestellte Lichtempfänger und Lichtsender zum Lesen der von den Lichtsendern 2 der Codierleiste abgegebenen Informationen bzw. zum Eingeben von neuen Zielinformationen in den Speicher 7 der Codierleiste angeordnet.

Da die Sender 2 und die Empfänger 3 sowie der Speicher 7 im Inneren der Codierleiste 1 zu ihrem Betrieb eine Stromversorgung benötigen, ist im Inneren der Codierleiste ferner ein Akkumulator 8 vorgesehen, der über eine auf einer der Außenflächen der Codierleisten 1 vorgesehene Solarzelle 9 von einer Lichtquelle 10 ständig nachgeladen wird.

## Ansprüche

1. Einrichtung zum Steuern des Transportes von Werkstückträgern bzw. der Bearbeitung von Werkstücken in voll- oder teilautomatischen Fertigungsstraßen, unter Verwendung sogenannter Codierleisten, **gekennzeichnet durch** einen quaderförmigen Körper (1) (Codierleiste), an dessen einer Längsseite eine Reihe von Lichtempfängern (3) zum Aufnehmen und eine Reihe von Lichtsendern (2) zum Abgeben von den jeweils nächsten Transportweg bzw. die jeweils nächste Bearbeitungsstation des Werkstückes kennzeichnenden codierten Informationen vorgesehen sind, und durch einen im Inneren der Codierleiste angeordneten Speicher (7) zum Zwischenspeichern der Informationen der Transportwege bzw. Bearbeitungsstationen, sowie durch an jeder Transportwegverzweigung bzw. Bearbeitungsstation angeordnete Lichtempfänger und/oder Lichtsender zum Lesen der von den Lichtsendern (2) der Codierleiste abgegebenen Informationen bzw. zum Eingeben von neuen Zielinformationen in den Speicher (7) der Codierleiste.

2. Einrichtung nach Anspruch 1, **dadurch gekennzeichnet**, daß als Lichtsender (2) Leuchtdioden und als Lichtempfänger (3) Fototransistoren vorgesehen sind.

3. Einrichtung nach Anspruch, **dadurch gekennzeichnet**, daß die Leuchtdioden (2) Licht im Infrarotbereich aussenden.

4. Einrichtung nach einem der Ansprüche 2 oder 3, **dadurch gekennzeichnet**, daß das von den Leuchtdioden (2) ausgesandte Licht moduliert ist.

5. Einrichtung nach einem der Ansprüche 1 bis 4, **dadurch gekennzeichnet**, daß die Lichtsender (2) und Lichtempfänger (3) an der Längsseite der Codierleiste jeweils in einer in Transportrichtung (4) liegenden Reihe angeordnet sind und daß sich vor jeder Reihe ein zusätzlicher Sender (5) bzw. Empfänger (6) befindet, der beim Passieren einer Erkennungsstation das Einschalten der Sender (2) bzw. Empfänger (3) der Codierleiste bewirkt.

6. Einrichtung nach einem der Ansprüche 1 bis 5, **gekennzeichnet durch** einen im Inneren der Codierleiste (1) angeordneten Akkumulator (8) für die Stromversorgung der Sender (2), der Empfänger (3) und des Speichers (7).

7. Einrichtung nach Anspruch 6, **gekennzeichnet durch** eine auf einer der Oberflächen der Codierleiste (1) angeordnete Solarzelle (9) zum ständigen Nachladen des Akkumulators (8).

8. Einrichtung nach einem der Ansprüche 1 bis 7, **dadurch gekennzeichnet**, daß die Codierleiste (1) zur Erhöhung der Sicherheit völlig vergossen ist.

## Claims

1. Appliance for controlling the transport of work supports or the machining of workpieces in fully or partly automatic production lines with the use of so-called coding bars, characterised by a right-parallelepipedal body (1) (coding bar), on the one longitudinal side of which there is provided a row of light receivers (3) for receiving and a row of light transmitters (2) for transmitting coded information characterising what is respectively the next transport path or, respectively, the next machining station of the workpiece, and by a memory (7), arranged inside the coding bar, for buffer-storing the information on the transport paths or machining stations as well as by light receivers and/or light transmitters, arranged at each transport path branch or machining station, for reading the information transmitted by the light transmitters (2) of the coding bar or, respectively, for entering new target information into the memory (7) of the coding bar.

2. Appliance according to Claim 1, characterised in that light-emitting diodes are provided as light transmitters (2) and phototransistors are provided as light receivers (3).

3. Appliance according to Claim 2, characterised in that the light-emitting diodes (2) emits light in the infrared range.

4. Appliance according to one of Claims 2 or 3, characterised in that the light emitted by the light-emitting diodes (2) is modulated.

5. Appliance according to one of Claims 1 to 4, characterised in that the light transmitters (2) and light receivers (3) are arranged on the longitudinal side of the coding bar, in each case in a row lying in the direction of transport (4), and in that in front of each row there is respectively an additional transmitter (5) or receiver (6), which effects the switching-on of the transmitters (2) and receivers (3), respectively, upon passing a detection station.

6. Appliance according to one of Claims 1 to 5, characterised by an accumulator (8), arranged inside the coding bar (1), for the power supply of the transmitters (2), the receivers (3) and the memory (7).

7. Appliance according to Claim 6, characterised by a solar cell (9), arranged on one of the surfaces of the coding bar (1), for the constant recharging of the accumulator (8).

8. Appliance according to one of Claims 1 to 7, characterised in that the coding bar (1) is completely encapsulated to increase reliability.

## Revendications

1. Dispositif pour commander le transport de supports de pièces ou le traitement de pièces dans des chaînes de production entièrement automatiques, ou partiellement automatiques en utilisant ce qu'on désigne par des barres de codage, caractérisé par un corps (1) parallélépipédique (barre de codage), sur l'un des côtés longitudinaux duquel sont prévus une rangée de récepteurs de lumière (3) destinés à la réception et une rangée d'émetteurs de lumière (2) destinés à l'émission des informations codées caractérisant la voie de transport suivante ou le poste de travail suivant de la pièce, et par une mémoire (7) disposée à l'intérieur de la barre de codage et destinée à mémoriser temporairement les informations des voies de transport ou des postes de travail, ainsi que par des récepteurs de lumière et/ou des émetteurs de lumière disposés à chaque embranchement de transport ou à chaque poste de travail et destinés à lire les informations émises par les émetteurs de lumière (2) de la barre de codage ou à introduire dans la mémoire (7) de nouvelles informations de destination.

2. Dispositif suivant la revendication 1, caractérisé en ce qu'il est prévu, comme émetteurs de lumière (2), des diodes luminescentes et, comme récepteurs de lumière (3), des phototransitors.

3. Dispositif suivant la revendication 2, caractérisé en ce que les diodes luminescentes (2) émettent de la lumière dans le domaine infrarouge.

4. Dispositif suivant l'une des revendications 2 ou 3, caractérisé en ce que la lumière émise par les diodes luminescentes (2) est modulée.

5. Dispositif suivant l'une des revendications 1 à 4, caractérisé en ce que les émetteurs de lumière (2) et les récepteurs de lumière (3) sont disposés sur le côté longitudinal de la barrette de codage suivant une rangée s'étendant dans la direction de transport (4) et en ce que devant chaque rangée se trouve un émetteur (5) ou un récepteur (6) supplémentaire qui, lors du passage dans un poste d'identification, provoque la mise en circuit des émetteurs (2) ou du récepteur (3) de la barrette de codage.

6. Dispositif suivant l'une des revendications 1 à 5, caractérisé par un accumulateur (8) gui est disposé à l'intérieur de la barre de codage (1) et gui est destiné à alimenter en courant électrique l'émetteur (2), le récepteur (3) et la mémoire (7).

7. Dispositif suivant la revendication 6, caractérisé par une cellule solaire (9), qui est disposée sur l'une des surfaces de la barre de codage (1) et qui est destinée à recharger en permanence l'accumulateur (8).

8. Dispositif selon l'une des revendications 1 à 7, caractérisé en ce que la barre de codage (1) est scellée entièrement pour augmenter la sécurité.